# EUROPÄISCHE PATENTSCHRIFT

(11) **EP 3 374 851 B1**
(45) Veröffentlichungstag und Bekanntmachung des Hinweises auf die Patenterteilung: **01.11.2023**
(21) Anmeldenummer: 16795311.6
(22) Anmeldetag: 11.11.2016
(51) Int. Cl.: G06F 3/12

(54) **VERFAHREN ZUR EINGABE VON DRUCKDATEN FÜR DIE BEDRUCKUNG EINES BEDRUCKUNGSOBJEKTS MIT EINEM DRUCKER UND DRUCKSYSTEM MIT MINDESTENS ZWEI DRUCKERN**
METHOD FOR INPUTTING PRINT DATA FOR PRINTING ON A PRINT OBJECT BY MEANS OF A PRINTER, AND PRINTING SYSTEM HAVING AT LEAST TWO PRINTERS
PROCÉDÉ DE SAISIE DE DONNÉES D'IMPRESSION POUR L'IMPRESSION D'UN OBJET À IMPRIMER AU MOYEN D'UNE IMPRIMANTE, ET SYSTÈME D'IMPRESSION COMPRENANT AU MOINS DEUX IMPRIMANTES

(30) Priorität: 13.11.2015 DE 102015119681
(43) Veröffentlichungstag der Anmeldung: 19.09.2018
(73) Patentinhaber: Phoenix Contact GmbH & Co. KG, 32825 Blomberg (DE)
(72) Erfinder: ISAAK, Peter, 32758 Detmold (DE); SCHIERHOLZ, Albrecht, 32816 Schieder-Schwalenberg (DE)
(74) Vertreter: Gesthuysen Patentanwälte
(86) Internationale Anmeldenummer: PCT/EP2016/077411
(87) Internationale Veröffentlichungsnummer: WO 2017/081237

(56) Entgegenhaltungen:
- JP-A- 2000 020 829
- US-A1- 2003 133 146
- US-A1- 2010 290 082

## Beschreibung

Die Erfindung betrifft ein Verfahren zur Eingabe von der Beschriftung eines Bedruckungsobjekts dienenden Druckdaten durch einen Benutzer für die Bedruckung eines Kennzeichnungs- oder Markierungsschilds als Bedruckungsobjekt mit einem ersten Drucker oder einem externen Drucker, wobei der erste Drucker ein Gehäuse mit einem innerhalb des Gehäuses ausgebildeten Druckraum, eine Druckvorrichtung, eine Aufnahmevorrichtung für das zu bedruckende Bedruckungsobjekts, eine Steuer- und Auswerteeinheit, einen Speicher, eine Eingabe- und Anzeigeeinrichtung und eine Datenkommunikationsschnittstelle aufweist. Außerdem betrifft die Erfindung noch Drucksystem mit mindestens zwei Druckern zur Durchführung des Verfahrens.

In der industriellen und gewerblichen Praxis werden zur Kennzeichnung und Beschriftung von Maschinen, Geräten, Klemmen, Kabeln oder Leitern unterschiedliche Arten von Kennzeichnungs- und Markierungsschildern verwendet, auf denen Informationen bezüglich der Bauteile, denen sie zugeordnet werden, aufgebracht sind. Hierzu werden die Kennzeichnungs- oder Markierungsschilder üblicherweise in einem Drucker mit einem entsprechenden Druckmuster, in der Regel alphanumerischen Zeichen, versehen. Für die Markierung werden unterschiedliche Drucker mit unterschiedlichen Druckverfahren verwendet, beispielsweise Tintenstrahldrucker, Thermotransferdruckers oder UV-Drucker. Derartige Markierungsdrucker sind beispielsweise aus dem Katalog "Markierungssysteme Werkzeuge Montagematerial, 1013 /1014", Seiten 28 bis 37 der Phoenix Contact GmbH & Co. KG bekannt.

In der Praxis werden häufig Bedruckungsobjekte in Kartenformat verwendet, die eine Mehrzahl von einzelnen Markierungsschildern aufweisen. Die Bedruckungsobjekte, die häufig auch als Marker bezeichnet werden, sind dabei insbesondere als Kunststoffspritzteile oder als Kunststoffstanzteile ausgebildet. Bei Kunststoffspritzteilen, die auch als Universal Card Material (UniCard oder UC-Material) bezeichnet werden, sind die Markierungsschilder über Stege in einem äußeren Rahmen befestigt. Nach dem Bedrucken können die einzelnen Markierungsschilder, die häufig zur Leiter- und Kabelmarkierung oder zur Klemmenmarkierung verwendet werden, vom Rahmen abgetrennt werden. Bei Kunststoffstanzteilen, die auch als Universal Sheet Material (UniSheet oder US-Material) bezeichnet werden, bilden mehrere Reihen von Markierungsschildern zusammen einen Marker, wobei nach dem Bedrucken des US Materials die einzelnen Markierungsschilder voneinander getrennt werden können.

Außerdem können mehrere Kennzeichnung- oder Markierungsschilder auch auf einem gemeinsamen Trägerbogen aufgebracht, insbesondere aufgeklebt werden, von dem die einzelnen Kennzeichnungs- oder Markierungsschilder nach der Markierung einfach abgezogen werden können. Derartige Trägerbögen werden in der Praxis häufig auch als Beschriftungsbögen oder Etikettenbögen bezeichnet. Darüber hinaus gibt es auch Kennzeichnung- oder Markierungsschilder, bei denen ein Rollenmaterial aus Ausgangsmaterial verwendet wird. Auch hier sind die einzelnen Kennzeichnungs- oder Markierungsschilder häufig als Aufkleber ausgebildet, die nach dem Bedrucken vom Trägermaterial abgezogen werden können. Als Rollenmaterial können auch Schrumpfschläuche verwendet werden, bei denen die bedruckten Marker anschließend an eingebrachten Perforationen getrennt oder auf die gewünschte Länge zugeschnitten werden können.

Nachfolgend werden die unterschiedlichen Arten von Markern allgemein als Bedruckungsobjekte bezeichnet, wobei die Bedruckungsobjekte aus unterschiedlichen Materialien, insbesondere unterschiedlichen Kunststoffen, bestehen und unterschiedliche Abmessungen, insbesondere unterschiedlichen Materialstärken aufweisen können.

Um die unterschiedlichen Bedruckungsobjekte bedrucken zu können, werden in der Regel unterschiedliche Arten von Druckern verwendet. Dabei sind Drucker, mit denen Bedruckungsobjekte in Kartenformat bedruckt werden können, in der Regel nicht dazu geeignet, auch Rollenmaterial zu bedrucken. Damit bei Druckern zum Bedrucken von Kartenmaterial Bedruckungsobjekte mit ihren unterschiedlichen Abmessungen eingesetzt und bedruckt werden können, werden die einzelnen Bedruckungsobjekte bei einigen Drucker in ein für das Bedruckungsobjekt passendes Magazin eingelegt bzw. eingesetzt. In der Regel können dabei mehrere Bedruckungsobjekte jeweils einzeln in ein Magazin eingelegt werden, so dass die Anzahl der Bedruckungsobjekte größer als die Anzahl der Magazine ist. Wenn alle Magazine die gleichen Außenabmessungen aufweisen, kann jedes Magazin in die Aufnahmevorrichtung des Druckers eingesetzt werden, die nach Art einer Schublade zwischen einer Be- und Entladeposition außerhalb des Druckraums und einer Druckposition innerhalb des Druckraums verfahren werden kann.

Zum Bedrucken von im industriellen Bereich eingesetzten Bedruckungsobjekten haben sich Thermotransferdrucker als besonders geeignet herausgestellt. Beim Thermotransferdruck wird eine spezielle, mit temperaturempfindlicher Farbe beschichtete Folie zwischen dem Bedruckungsobjekt und einem Thermodruckkopf als Druckvorrichtung hindurchgeführt, wobei die Folie als Farbband in einer entsprechenden Druckerkassette angeordnet ist. Mit dem Thermotransferdruck lassen sich ein exakter Farbaufdruck und eine hohe Druckqualität bei einem hohen Oberflächenglanz erzeugen. Hierfür ist es allerdings erforderlich, dass die Druckparameter, wie Temperatur, Druckgeschwindigkeit, Material und Dicke des Bedruckungsobjekts sowie des Farbbandes aufeinander abgestimmt sind.

Ist der Drucker als Desktop-Drucker ausgebildet, was bei den aus der Praxis bekannten Thermotransferdruckern meistens der Fall ist, so erfolgt die Eingabe der Druckparameter sowie der der eigentlichen Beschriftung des Bedruckungsobjekts dienenden Druckdaten mit Hilfe spezieller Software, wobei die Eingabe an externen Rechnern mit Hilfe grafischer Benutzeroberflächen erfolgt. Diese Art der Eingabe von Druckdaten ist für den Benutzer sehr komfortabel, zumal die Druckparameter und Druckdaten häufig bereits durch entsprechende Softwarepakete zur Verfügung gestellt werden. Auch die manuelle Erstellung von einzelnen Druckdaten für bestimmte Bedruckungsobjekte ist an externen Rechnern mit üblichen Tastaturen und entsprechend großen Bildschirmen relativ komfortabel, insbesondere auch bei Verwendung einer entsprechenden grafischen Eingabesoftware.

Die Übermittlung der Druckdaten erfolgt dabei über die Datenkommunikationsschnittstelle des Druckers vom Rechner zum Drucker, wobei der Rechner ebenfalls eine entsprechende Datenkommunikationsschnittstelle aufweist. Der Drucker stellt somit ein Peripheriegerät des Rechners dar, wobei über den Rechner die Eingabe der Druckparameter und der Druckdaten erfolgen kann. Dabei können auch mehreren, unterschiedlichen Druckern mittels eines Rechners die jeweils erforderlichen Druckdaten übermittelt werden. Dies ist für die Eingabe der Druckdaten zwar sehr komfortabel, jedoch mit einem erhöhten Aufwand verbunden, insbesondere wenn die Drucker im mobilen Bereich eingesetzt werden sollen.

Beim mobilen Einsatz von portablen Druckern, die meist zur Bedruckung von Rollenmaterial vorgesehen sind und teilweise als Handheld-Drucker bezeichnet werden, erfolgt die Eingabe der Druckparameter und der Druckdaten mit Hilfe der am Drucker vorgesehenen Eingabe- und Anzeigeeinrichtung, die jedoch nur relativ begrenzte Abmessungen und häufig auch nur wenige Funktionstasten aufweist. Auch hierbei kann die Eingabe der Druckparameter und Druckdaten durch entsprechende Software unterstützt werden, indem dem Benutzer entsprechende Menüpunkte und Auswahlfilter angezeigt bzw. vorgeschlagen werden. Die Auswahl der Druckparameter und die Eingabe der Druckdaten ist dabei jedoch wesentlich weniger komfortabel, als dies bei einer Eingabe über einen separaten Rechner möglich ist. Aufgrund der geringen Abmessungen der Anzeigeeinrichtung ist darüber hinaus eine Echtbilddarstellung des gewünschten Druckbildes in der Regel nicht möglich.

Wenn ein Drucker außerdem dafür ausgelegt sein soll, eine Vielzahl von unterschiedlichen Bedruckungsobjekten bedrucken zu können, so muss der Benutzer zunächst über mehrere Filter oder Menüpunkte das zu bedruckende Bedruckungsobjekt auswählen, bevor er mit der Eingabe der Druckdaten in die für das Bedruckungsobjekt vorgesehene Eingabemaske, die häufig auch als Druckvorlage bezeichnet wird, beginnen kann. Der Zeitaufwand bei der Auswahl der Eingabemaske steigt dabei in dem Maße, in dem auch die Anzahl der Bedruckungsobjekt zunimmt, die von dem Drucker bedruckt werden können.

Die US 2003/0133146 A1 offenbart ein Druckersystem mit einem ersten Drucker und mindestens einem zweiten Drucker, mit dem ein bestehender Druckauftrag, nämlich eine Textdatei, auf einem geeigneten Drucker eines mehrere Drucker aufweisenden Netzwerkes ausgedruckt werden kann. Dabei wird die Aufgabe des Auswählens eines geeigneten Druckers dem Benutzer abgenommen und von einer Druckerauswahlsteuerung des Druckersystems automatisch übernommen.

Die JP 2000020829 A beschreibt eine Kaskade von zwei Etikettendruckern, mit der in einer Datei gespeicherte Produktinformationen auf ein vorbestimmtes Etikettenformat gedruckt werden können.

Der vorliegenden Erfindung liegt daher die Aufgabe zugrunde, das eingangs beschrieben Verfahren zur Eingabe von Druckdaten für die Bedruckung eines Bedruckungsobjekts mit einem Drucker so weiterzubilden, dass die Eingabe der Druckdaten auch im mobilen Einsatz mit möglichst geringem Aufwand aber dennoch für den Benutzer komfortabel erfolgen kann. Darüber hinaus liegt der Erfindung die Aufgabe zugrunde, ein zur Durchführung des Verfahrens geeignetes Druckersystem mit mindestens zwei Druckern zur Verfügung zu stellen.

Diese Aufgabe ist bei dem erfindungsgemäßen Verfahren mit den Merkmalen des Patentanspruchs 1 gelöst. Erfindungsgemäß weist das Verfahren dabei zunächst folgende Schritte auf:
- Anzeige eines Drucker-Auswahlfensters auf der Eingabe- und Anzeigeeinrichtung und Auswertung einer vorgenommenen Auswahl des Druckers, mit dem ein Kennzeichnungs- oder Markierungsschild bedruckt werden soll, in der Steuer- und Auswerteeinheit, wobei die Auswahl den ersten Drucker und einen externen Drucker umfasst,
- Auswahl eines Bedruckungsobjekt-Auswahlfensters aus mindestens zwei im Speicher gespeicherten Bedruckungsobjekt-Auswahlfenstern durch die Steuer- und Auswerteeinheit anhand der ausgewerteten Auswahl des Druckers,
- Anzeige des ausgewählten Bedruckungsobjekt-Auswahlfensters auf der Eingabe- und Anzeigeeinrichtung, wobei das Bedruckungsobjekt-Auswahlfenster mindestens ein Kennzeichnungs- oder Markierungsschild oder eine Bezeichnung des Kennzeichnungs- oder Markierungsschilds anzeigt, das von dem ausgewähltem Drucker bedruckbar ist, und Auswertung einer vorgenommenen Auswahl des Kennzeichnungs- oder Markierungsschilds in der Steuer- und Auswerteeinheit,

- Auswahl einer Eingabemaske aus einer Mehrzahl von im Speicher gespeicherten Eingabemasken durch die Steuer- und Auswerteeinheit anhand der ausgewerteten Auswahl des Kennzeichnungs- oder Markierungsschilds,
- Anzeige der ausgewählten Eingabemaske auf der Eingabe- und Anzeigeeinrichtung,
- Übertragen der in die Eingabemaske eingegebenen Druckdaten an die Druckvorrichtung des ersten Druckers oder über die Datenkommunikationsschnittstelle des Druckers an einen externen, zweiten Drucker, in Abhängigkeit von der zuvor ausgewerteten Auswahl eines Druckers.

Bei dem erfindungsgemäßen Verfahren erfolgt somit die Eingabe der Druckdaten für die Bedruckung eines Kennzeichnungs- oder Markierungsschilds über die dazu entsprechend ausgebildete Eingabe- und Anzeigeeinrichtung eines ersten Druckers, wobei der Druckvorgang anschließend entweder auf dem Drucker erfolgt, an dem auch die Eingabe der Druckdaten vorgenommen worden ist, oder auf einem zweiten, externen Drucker. Die Übertragung der Druckdaten an den zweiten Drucker erfolgt dabei über die Datenkommunikationsschnittstelle des ersten Druckers an eine entsprechende Datenkommunikationsschnittstelle des zweiten Druckers. Bei dem erfindungsgemäßen Verfahren stellt der erste Drucker somit nicht mehr einen bezüglich der Erstellung der Druckdaten "passiven" Drucker, sondern eine Art "Master"-Drucker dar, über den auch die Eingabe und Übertragung der Druckdaten an den zweiten, externen Drucker erfolgt. Der zweite Drucker stellt damit im Verhältnis zum ersten Drucker eine Art "Slave"-Drucker dar.

Bei der Durchführung des erfindungsgemäßen Verfahrens wird zunächst auf der Eingabe- und Anzeigeeinrichtung des "Master"-Druckers ein Drucker-Auswahlfenster angezeigt, und anschließend in der Steuer- und Auswerteeinheit die von einem Benutzer vorgenommene Auswahl des Druckers, mit dem ein Bedruckungsobjekt bedruckt werden soll, ausgewertet. Anschließend wird von der Steuer- und Auswerteeinheit aus mindestens zwei im Speicher des "Master"-Druckers gespeicherten Bedruckungsobjekt-Auswahlfenstern ein Bedruckungsobjekt-Auswahlfenster ausgewählt und auf der Eingabe- und Anzeigeeinrichtung angezeigt. Die Auswahl des Bedruckungsobjekt-Auswahlfensters erfolgt dabei anhand der zuvor vorgenommenen Auswertung der Auswahl des Druckers, so dass für den ausgewählten Drucker passende Bedruckungsobjekt-Auswahlfenster angezeigt wird. Das Bedruckungsobjekt-Auswahlfenster zeigt dabei in der Regel mehrere Bedruckungsobjekte an, die von dem ausgewählten Drucker bedruckbar sind.

Handelt es sich bei dem "Master"-Drucker beispielsweise um einen Drucker zur Bedruckung von Kennzeichnungs- oder Markierungsschildern in Kartenformat, so werden in dem Bedruckungsobjekt-Auswahlfenster die unterschiedlichen Bedruckungsobjekte, wie beispielsweise verschiedene UniCard oder UniSheet-Materialien angezeigt, wenn der Benutzer zuvor diesen Drucker ausgewählt hat. Handelt es sich bei dem zweiten, externen Drucker beispielsweise um einen Drucker zur Bedruckung von Kennzeichnungs- oder Markierungsschildern in Rollenformat, so werden in dem Bedruckungsobjekt-Auswahlfenster die verschiedenen, mit diesem Drucker bedruckbaren Rollenmaterialien angezeigt, wenn der Benutzer zuvor den externen Drucker ausgewählt hat.

Von der Steuer- und Auswerteeinheit wird dann - nach Auswertung einer vorgenommenen Auswahl des zu bedruckenden Kennzeichnungs- oder Markierungsschilds - aus einer Mehrzahl von im Speicher gespeicherten Eingabemasken die für das ausgewählte Kennzeichnungs- oder Markierungsschild vorgesehene Eingabemaske ausgewählt und auf der Eingabe- und Anzeigeeinrichtung angezeigt. Der Benutzer kann dann mit der Eingabe der Druckdaten in die angezeigte Eingabemaske mittels der Eingabe- und Anzeigeeinrichtung beginnen. Ist die Eingabe der Druckdaten abgeschlossen, so werden die eingegebenen Druckdaten an die Druckvorrichtung des "Master"-Druckers übertragen, wenn ein Kennzeichnungs- oder Markierungsschild mit diesem Drucker bedruckt werden soll. Soll die Bedruckung eines Kennzeichnungs- oder Markierungsschilds mit einem zweiten, externen Drucker erfolgen, so werden die Druckdaten über die Datenkommunikationsschnittstelle des Druckers an den externen Drucker übertragen.

Gemäß einer vorteilhaften Ausgestaltung des erfindungsgemäßen Verfahrens erfolgt die Übertragung der eingegebenen Druckdaten an einen ausgewählten, externen Drucker direkt über ein Kabel oder drahtlos, d. h. ohne dass die Druckdaten über einen externen Server oder das Internet übertragen werden. Eine drahtlose Verbindung kann dabei beispielsweise über Funk, insbesondere über Bluetooth erfolgen.

Bei dem erfindungsgemäßen Verfahren kann die Eingabe der Druckdaten nicht nur für den "Master"-Drucker und einen externen Drucker, sondern auch für mehrere externe Drucker auf der Eingabe- und Anzeigeeinrichtung des "Master"-Druckers erfolgen. Vorzugsweise erfolgt hierzu nach der Anzeige des (ersten) Drucker-Auswahlfensters die Anzeige eines weiteren Drucker-Auswahlfensters, wenn die Auswertung der vorgenommenen (ersten) Auswahl des Druckers ergeben hat, dass das Bedruckungsobjekt mit einem externen Drucker bedruckt werden soll. Über das erste Drucker-Auswahlfenster erfolgt somit die Auswahl, ob die Bedruckung mit dem "Master"-Drucker oder mit einem externen Drucker erfolgen soll. In dem zweiten Drucker-Auswahlfenster erfolgt dann die Auswahl des konkreten externen Druckers, mit dem ein Bedruckungsobjekt bedruckt werden soll.

Mit dem erfindungsgemäßen Verfahren ist somit die Eingabe der Druckdaten über die Eingabe- und Anzeigeeinrichtung des "Master"-Druckers möglich, auch wenn der Druckvorgang auf einem anderen, externen Drucker erfolgen soll. Dadurch ist es möglich, auch bei portablen Drucker, die keine oder nur eine sehr kleine Eingabe- und Anzeigeeinrichtung aufweisen, die Eingabe der Druckdaten für den Benutzer übersichtlich und komfortabel zu gestalten. Die Auswahl des zu bedruckenden Bedruckungsobjekts sowie die Eingabe der Druckdaten erfolgt dabei über den ersten Drucker, den "Master"-Drucker, so dass auf die Verwendung eines Rechners zur Übertragung der Druckdaten an einen zweiten oder mehrere andere Drucker verzichtet werden kann. Über die Steuer- und Auswerteeinheit des "Master"-Druckers und auf dem "Master"-Drucker installierte entsprechende Software kann dabei der Benutzer bei der Auswahl der Bedruckungsobjekte und der Eingabe der Druckdaten unterstützt werden.

Gemäß einer besonders bevorzugten Ausgestaltung des erfindungsgemäßen Verfahrens erfolgt dann, wenn die Auswertung der vorgenommenen Auswahl des Druckers ergeben hat, dass das Bedruckungsobjekt mit dem "Master"-Drucker bedruckt werden soll, eine automatische Erkennung des zu bedruckenden Bedruckungsobjekts. Hierzu ist im Gehäuse des Druckers mindestens ein optischer Sensor zur Erfassung einer am Bedruckungsobjekt angeordneten Kennzeichnung vorgesehen. Dadurch kann die unter Umständen zeitaufwendige Auswahl des zu bedruckenden Bedruckungsobjekts über die am Drucker vorgesehene Eingabe- und Anzeigeeinrichtung wesentlich vereinfacht werden.

Gemäß der bevorzugten Ausgestaltung des Verfahrens wird dabei zunächst die Aufnahmevorrichtung in die Be- und Entladeposition außerhalb des Druckraums ausgefahren, so dass das zu bedruckende Bedruckungsobjekt in die Aufnahmevorrichtung eingesetzt werden kann. Anschließend wird beim Einfahren des Bedruckungsobjekts in den Druckraum die am Bedruckungsobjekt angeordnete Kennzeichnung vom optischen Sensor erfasst. Die automatische Erkennung des eingesetzten Bedruckungsobjekts wird dann von der Steuer- und Auswerteeinheit dazu genutzt, aus der Mehrzahl von im Speicher gespeicherten Eingabemasken die Eingabemaske auszuwählen, die für das eingelegte Bedruckungsobjekt vorgesehen ist.

Durch die Verwendung eines optischen Sensors, insbesondere eines Reflexlicht-Tasters, kann dabei auf einfache und kostengünstige Art und Weise eine am Bedruckungsobjekt angeordnete Kennzeichnung, die einem dem Bedruckungsobjekt zugeordneten Code entspricht, erfasst werden. Bei der Kennzeichnung handelt es sich vorzugsweise um eine Strichcode-Kennzeichnung, bestehend aus mehreren Einzelstrichen. Darüber hinaus kann es sich bei der Kennzeichnung auch um ein Lochmuster handeln, wobei dann als optischer Sensor vorzugsweise eine Lichtschranke verwendet wird, mit der feststellbar ist, ob an einer vorgegebenen Position ein Loch ausgebildet ist oder nicht. Ist die Erstreckung der Kennzeichnung parallel zur Bewegungsrichtung der Aufnahmevorrichtung angeordnet, so ist zur Erfassung der Kennzeichnung ein einziger, fest im Gehäuse angeordneter optischer Sensor ausreichend, da dann die Kennzeichnung beim Einfahren der Aufnahmevorrichtung in den Druckraum an dem optischen Sensor vorbeibewegt wird.

Die eingangs genannte Aufgabe ist bei einem Druckersystem mit mindestens zwei Druckern mit den Merkmalen des Patentanspruchs 6 gelöst. Die Drucker weisen jeweils ein Gehäuse mit einem innerhalb des Gehäuses ausgebildeten Druckraum, eine Druckvorrichtung, eine Aufnahmevorrichtung für das zu bedruckende Kennzeichnungs- oder Markierungsschild, eine Steuer- und Auswerteeinheit und eine Datenkommunikationsschnittstelle auf. Darüber hinaus weist zumindest der erste Drucker zusätzlich noch einen Speicher und eine Eingabe- und Anzeigeeinheit für einen Benutzer auf, über die die Auswahl des Druckers, des zu bedruckenden Kennzeichnungs- oder Markierungsschilds sowie die Eingabe der Druckdaten in eine entsprechende Eingabemaske erfolgt.

Erfindungsgemäß ist die Steuer- und Auswerteeinheit des ersten Druckers dazu ausgebildet, eine in einem auf der Eingabe- und Anzeigeeinheit angezeigten Drucker-Auswahlfenster der Eingabe- und Anzeigeeinheit vorgenommene Auswahl des Druckers, mit dem das Kennzeichnungs- oder Markierungsschild bedruckt werden soll, auszuwerten. Anhand der Auswahl des Druckers erfolgt dann die Anzeige eines Bedruckungsobjekt-Auswahlfensters auf der Eingabe- und Anzeigeeinrichtung, wobei die Steuer- und Auswerteeinheit dazu ausgebildet ist, die Auswahl eines Kennzeichnungs- oder Markierungsschilds in dem Bedruckungsobjekt-Auswahlfenster auszuwerten und aus einer Mehrzahl vom im Speicher gespeicherten Eingabemasken die für das ausgewählte Kennzeichnungs- oder Markierungsschild vorgesehene Eingabemaske auszuwählen.

Darüber hinaus ist die Steuer- und Auswerteeinheit des "Master"-Druckers dazu ausgebildet, die durch den Benutzer eingegebenen, der Beschriftung des Bedruckungsobjekts dienenden Druckdaten, die in der auf der Eingabe- und Anzeigeeinheit angezeigten Eingabemaske eingegeben sind, über die Datenkommunikationsschnittstelle an den zweiten Drucker zu übertragen, wenn die anfangs vorgenommene Auswertung der Auswahl des Druckers ergeben hat, dass das Kennzeichnungs- oder Markierungsschild mit einem zweiten, externen Drucker bedruckt werden soll. Die Steuer- und Auswerteeinheit des als "Master"-Drucker fungierenden ersten Druckers ist somit dazu in der Lage, einen zweiten Drucker, der mit dem ersten Drucker über die Datenkommunikationsschnittstelle verbunden ist, anzusteuern und den zweiten Drucker die auf der Eingabe- und Anzeigeeinheit des ersten Druckers eingegebenen Druckdaten zu übermitteln.

Bei dem erfindungsgemäßen Druckersystem ist es somit durch die Ausgestaltung der Steuer- und Auswerteeinheit des ersten Druckers möglich, das zuvor beschriebene erfindungsgemäße Verfahren durchzuführen, und die Ansteuerung und Eingabe der Druckdaten auch für einen zweiten, externen Drucker über den ersten Drucker vorzunehmen. Auf die Verwendung eines externen Rechners zur Steuerung der Drucker und insbesondere zur Eingabe und Übertragung der Druckdaten an die Drucker kann dadurch verzichtet werden.

Gemäß einer bevorzugten Ausgestaltung des erfindungsgemäßen Druckersystems ist die Eingabe- und Anzeigeeinheit des ersten Druckers als Touchscreen ausgebildet ist und weist vorzugsweise eine Größe (Bildschirmdiagonale) von mindestens 7 Zoll auf. Dadurch besteht die Möglichkeit, die Eingabemaske eines zu bedruckenden Bedruckungsobjekts so darzustellen, dass die Eingabemaske optisch im Wesentlichen dem Bedruckungsobjekt entspricht. Bei der Eingabe der Druckdaten sieht der Benutzer dann direkt, wie später das entsprechend bedruckte Bedruckungsobjekt ausschaut. Darüber hinaus ist vorzugsweise vorgesehen, dass die Eingabe- und Anzeigeeinheit drehbar oder schwenkbar am Gehäuse des Druckers befestigt ist. Hierdurch wird für den Benutzer die Bedienung, insbesondere die Eingabe der Druckdaten komfortabler, da er die Eingabe- und Anzeigeeinheit in eine Position bringen kann, in der Bedienung der Eingabe- und Anzeigeeinheit für ihn besonders einfach möglich ist.

Gemäß einer weiteren, besonders bevorzugten Ausgestaltung des erfindungsgemäßen Druckers ist im Gehäuse des ersten Druckers mindestens ein optischer Sensor zur Erfassung einer am Kennzeichnungs- oder Markierungsschild angeordneten Kennzeichnung vorgesehen. Die Steuer- und Auswerteeinheit des Druckers ist dabei dazu ausgebildet, anhand der vom Sensor erfassten Kennzeichnung des eingesetzten Kennzeichnungs- oder Markierungsschilds aus einer Mehrzahl von im Speicher gespeicherten Eingabemasken die für das eingesetzte Kennzeichnungs- oder Markierungsschild geeignete Eingabemaske auszuwählen. Die ausgewählte Eingabemaske wird dann auf der Eingabe- und Anzeigeeinrichtung des Druckers angezeigt, so dass der Benutzer direkt mit der Eingabe der Druckdaten für das Kennzeichnungs- oder Markierungsschild beginnen kann, ohne sich vorher unter Umständen zeitaufwendig durch eine Mehrzahl von Menüpunkten durchzuwählen oder aus einer Mehrzahl von möglichen Kennzeichnungs- oder Markierungsschildern das gewünschte Kennzeichnungs- oder Markierungsschild auszusuchen. Soll bei dem erfindungsgemäßen Druckersystem ein Kennzeichnungs- oder Markierungsschild mit dem ersten Drucker bedruckt werden, so ist somit durch die automatische Erfassung der Kennzeichnung des Kennzeichnungs- oder Markierungsschilds die Eingabe der Druckdaten noch komfortabler gestaltet.

Wie zuvor ausgeführt worden ist, weist das erfindungsgemäße Druckersystem mindestens zwei Drucker auf, von denen der erste Drucker eine Art "Master"-Drucker darstellt, über den der zweite Drucker angesteuert und insbesondere mit den Druckdaten zum Bedrucken des Kennzeichnungs- oder Markierungsschilds versehen wird. Vorzugsweise sind dabei die beiden Drucker zur Bedruckung von unterschiedlichen Kennzeichnungs- oder Markierungsschildern ausgebildet, so dass die Anzahl der möglichen zu bedruckenden Kennzeichnungs- oder Markierungsschildern weiter erhöht ist.

Vorteilhafterweise ist der erste Drucker des Druckersystems zur Bedruckung von Kennzeichnungs- oder Markierungsschildern in Kartenformat vorgesehen. Da es eine Vielzahl von unterschiedlichen Kennzeichnungs- oder Markierungsschildern in Kartenformat gibt, die unterschiedliche Abmessungen aufweisen können, ist dabei die Aufnahmevorrichtung des Druckers zur Aufnahme eines auswechselbaren Magazins ausgebildet, in das das jeweils zu bedruckende Kennzeichnungs- oder Markierungsschild eingelegt werden kann. In der Regel können dabei mehrere Kennzeichnungs- oder Markierungsschilder jeweils einzeln in ein Magazin eingelegt werden, so dass die Anzahl der Kennzeichnungs- oder Markierungsschilder deutlich größer als die Anzahl der Magazine ist. Weisen alle Magazine die gleichen Außenabmessungen auf, kann jedes Magazin in die Aufnahmevorrichtung des Druckers eingesetzt werden, die nach Art einer Schublade zwischen einer Be- und Entladeposition außerhalb des Druckraums und einer Druckposition innerhalb des Druckraums verfahren werden kann.

Insbesondere dann, wenn der erste Drucker zur Bedruckung von Kennzeichnungs- oder Markierungsschildern in Kartenformat vorgesehen ist, ist der zweite Drucker vorzugsweise zur Bedruckung von Kennzeichnungs- oder Markierungsschildern in Rollenformat vorgesehen. Der zweite Drucker kann dabei keine oder nur eine kleine Eingabe- und Anzeigeeinrichtung aufweisen, was sich bei dem erfindungsgemäßen Druckersystem hinsichtlich des Bedienungskomforts nicht nachteilig auswirkt, da die Eingabe der Druckdaten über den ersten Drucker erfolgen kann. Bei dem zweiten Drucker kann es sich daher insbesondere auch um einen Handheld-Drucker handeln.

Im Einzelnen gibt es nun eine Vielzahl von Möglichkeiten, das erfindungsgemäße Verfahren sowie das erfindungsgemäße Druckersystem auszugestalten und weiterzubilden. Dazu wird verwiesen sowohl auf die den Patentansprüchen 1 und 6 nachgeordneten Patentansprüche, als auch auf die nachfolgende Beschreibung von Ausführungsbeispielen in Verbindung mit den Zeichnungen.

In der Zeichnung zeigen
- Fig. 1: ein Ausführungsbeispiel eines Druckersystems mit zwei Druckern,
- Fig. 2: ein vereinfachtes Blockdiagramm der beiden Drucker des Druckersystems,
- Fig. 3: ein vereinfachtes Ablaufdiagramm des erfindungsgemäßen Verfahrens,
- Fig. 4: ein Ausführungsbeispiel der bei dem ersten Drucker nacheinander angezeigten Auswahlfenster,
- Fig. 5: ein Ausführungsbeispiel der bei einem zweiten Drucker nacheinander angezeigten Auswahlfenster, und
- Fig. 6: eine schematische Darstellung des ersten Druckers des Druckersystems, im Querschnitt.

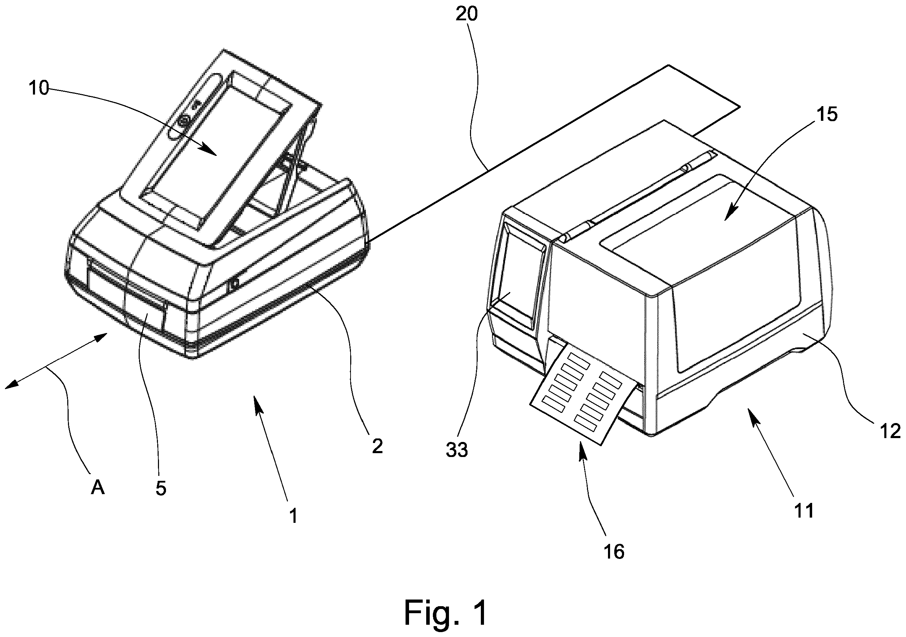

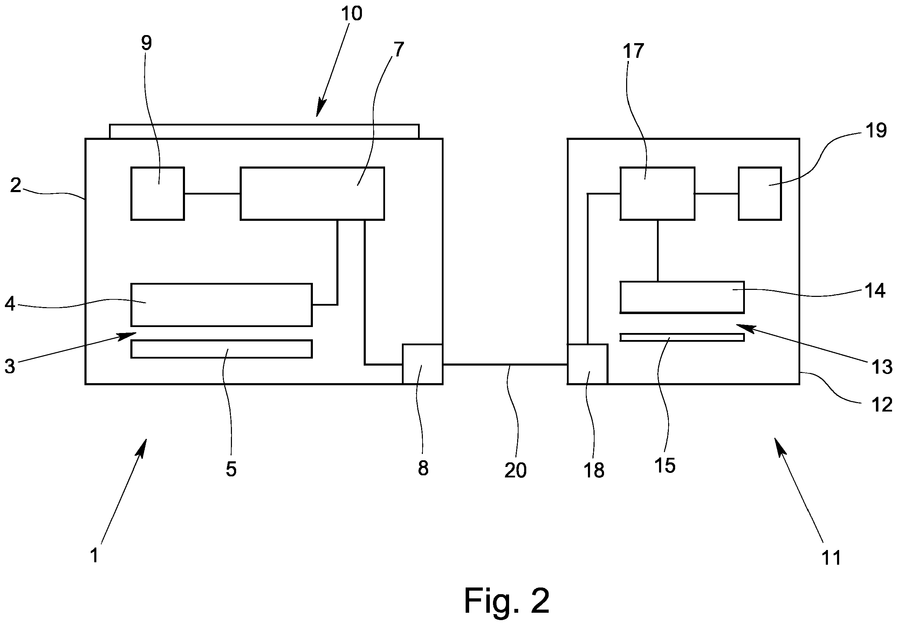

Fig. 1 und 2 zeigen ein Druckersystem gemäß der vorliegenden Erfindung mit einem ersten Drucker 1 und einem zweiten Drucker 11, die beide ein Gehäuse 2, 12 mit einem innerhalb des Gehäuses 2, 12 ausgebildeten Druckraum 3, 13 aufweisen. Wie aus dem vereinfachten Blockdiagramm gemäß Fig. 2 ersichtlich ist, weisen beide Drucker 1, 11 darüber hinaus eine Druckvorrichtung 4, 14 und eine Aufnahmevorrichtung 5, 15 für das zu bedruckende Kennzeichnungs- oder Markierungsschildern 6, 16 auf. Im dargestellten Ausführungsbeispiel handelt es sich bei beiden Druckern 1, 11 um Thermotransfer-Drucker, so dass beide Drucker 1, 11 als Druckvorrichtung 4, 14 jeweils einen Thermodruckkopf aufweisen. Der erste Drucker 1 ist dabei zur Bedruckung von Kennzeichnungs- oder Markierungsschildern 6 in Kartenformat ausgebildet, während der zweite Drucker 11 zur Bedruckung von Kennzeichnungs- oder Markierungsschildern 16 in Rollenformat vorgesehen ist.

Aus Fig. 2 ist weiter ersichtlich, dass beide Drucker 1, 11 noch eine Steuer- und Auswerteeinheit 7, 17, eine Datenkommunikationsschnittstelle 8, 18 und einen Speicher 9, 19 aufweisen, wobei die Steuer- und Auswerteeinheiten 7, 17 mit den Datenkommunikationsschnittstellen 8, 18 und den Speichern 9, 19 verbunden sind. Darüber hinaus sind die beiden Steuer- und Auswerteeinheiten 7, 17 auch jeweils noch mit der zugehörigen Druckvorrichtung 4, 14 zu deren Steuerung verbunden. Außerdem weißt der erste Drucker 1 noch eine Eingabe- und Anzeigeeinheit 10 auf, die ebenfalls mit der Steuer- und Auswerteeinheit 7 verbunden ist.

Über die bei beiden Druckern 1, 11 ausgebildete Datenkommunikationsschnittstelle 8, 18 sind die beiden Drucker 1, 11 derart miteinander verbunden, dass der zweite Drucker 11 vom ersten Drucker 1 steuerbar ist, wobei dem zweiten Drucker 11 insbesondere die zur Bedruckung des Kennzeichnungs- oder Markierungsschilds 16 benötigten Druckdaten vom ersten Drucker 1 übermittelt werden können. Der erste Drucker 1 fungiert somit als eine Art "Master"-Drucker gegenüber dem zweiten Drucker 11, der entsprechend eine Art "Slave"-Drucker darstellt. Neben den eigentlichen Druckdaten können dem zweiten Drucker 11 darüber hinaus auch die notwendigen Druckparameter von dem ersten Drucker 1 übermittelt werden. Alternativ oder zusätzlich können die Druckparameter oder ein Teil der Druckparameter auch im Speicher 19 des zweiten Druckers 11 gespeichert sein, so dass die zum Bedrucken benötigten Druckparameter vor dem Bedrucken des Kennzeichnungs- oder Markierungsschilds 16 von der Steuer- und Auswerteeinheiten 17 aus dem Speicher 19 geladen werden. Die Verbindung 20 zwischen den beiden Druckern 1, 11 bzw. zwischen den beiden Datenkommunikationsschnittstellen 8, 18 kann über ein Kabel oder auch drahtlos erfolgen, so dass es sich bei der in Fig. 1 dargestellten Verbindung 20 nicht um eine körperliche Verbindung handeln muss.

Zur Auswahl des zu bedruckenden Kennzeichnungs- oder Markierungsschilds 6, 16 sowie zur Eingabe der Druckdaten weist der erste Drucker 1 eine Eingabe- und Anzeigeeinheit 10 auf, die bei den bevorzugten Ausführungsbeispiel als Touchscreen ausgebildet ist. Wie aus der Darstellung gemäß Fig. 1 erkennbar ist, ist die Eingabe- und Anzeigeeinheit 10 schwenkbar am Gehäuse 2 des ersten Druckers 1 befestigt, so dass die Eingabe- und Anzeigeeinheit 10 - wie dargestellt - in eine hochgeschwenkte Position verstellt werden kann. Die Position der Eingabe- und Anzeigeeinheit 10 kann so an unterschiedliche Einsatzbedingungen angepasst werden, wodurch die Eingabe der Druckdaten in die Eingabe- und Anzeigeeinheit 10 sowie das Ablesen verschiedener Informationen von der Eingabe- und Anzeigeeinheit 10 für den Benutzer erleichtert ist.

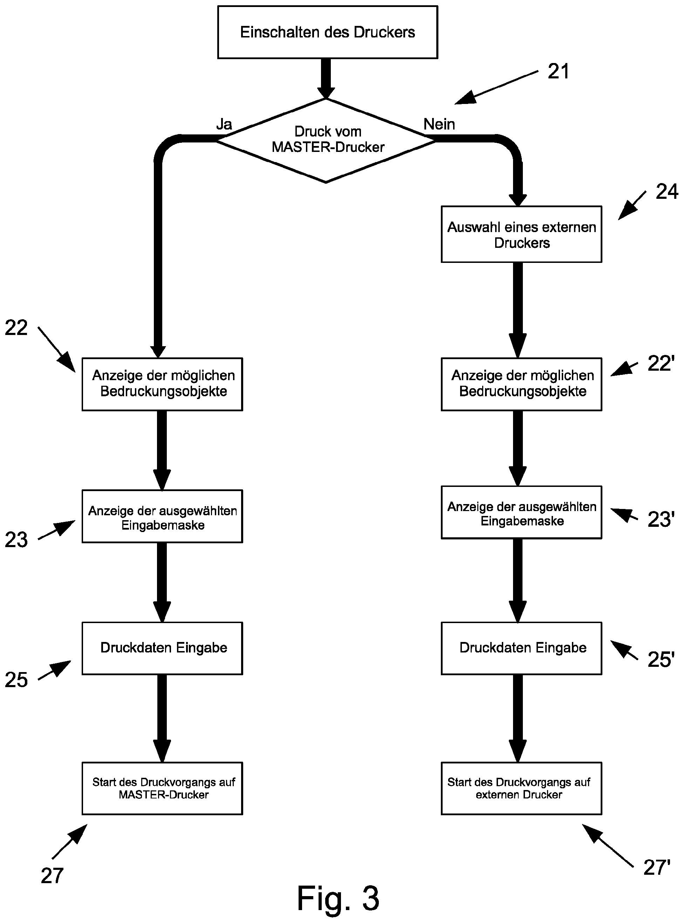

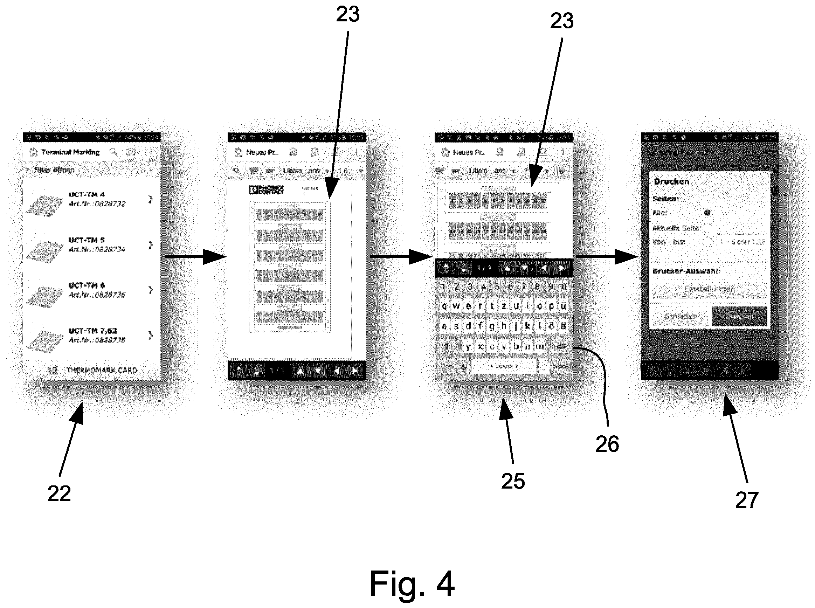

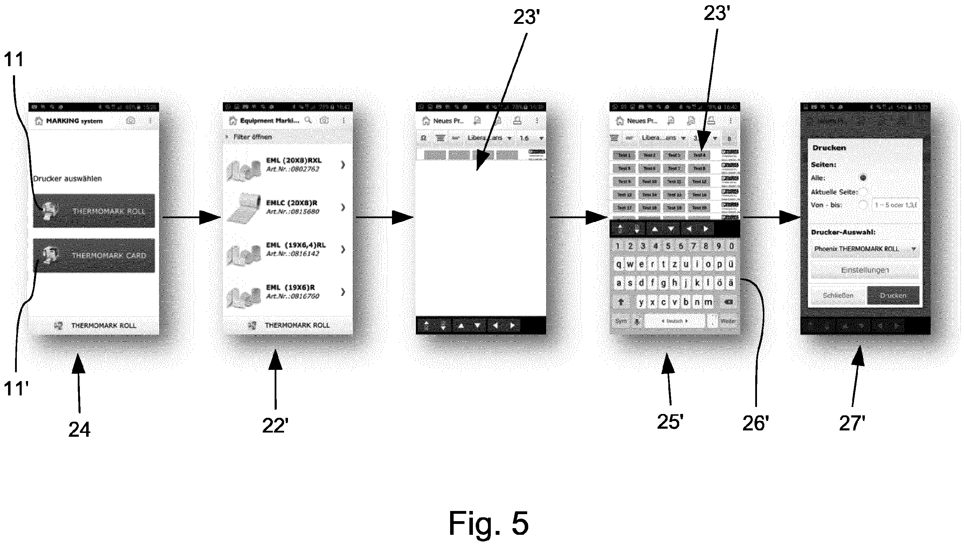

Zur Eingabe der Druckdaten für die Bedruckung eines Kennzeichnungs- oder Markierungsschilds 6, 16 werden auf der Eingabe- und Anzeigeeinrichtung 10 des Druckers 1 entsprechend dem in Fig. 3 dargestellten vereinfachten Ablaufdiagramm des erfindungsgemäßen Verfahrens verschiedene Auswahlfenster angezeigt. In Fig. 4 sind verschiedene Ausführungsbeispiele der Auswahlfenster dargestellt, die auf der Eingabe- und Anzeigeeinheit 10 angezeigt werden, wenn ein Kennzeichnungs- oder Markierungsschild 6 mit dem ersten Drucker 1 bedruckt werden soll. Entsprechend sind in Fig. 5 verschiedene Ausführungsbeispiele der Auswahlfenster dargestellt, die auf der Eingabe- und Anzeigeeinheit 10 des ersten Druckers 1 angezeigt werden, wenn mit dem zweiten Drucker 11 ein Kennzeichnungs- oder Markierungsschild 16 bedruckt werden soll.

Bei dem erfindungsgemäßen Verfahren wird gemäß Fig. 3 nach dem Einschalten des Druckers zunächst ein erstes Drucker-Auswahlfenster 21 angezeigt, über das der Benutzer auswählen kann, ob die Bedruckung des Kennzeichnungs- oder Markierungsschilds mit dem vorliegenden Drucker 1 oder mit einem zweiten, externen Drucker 11 erfolgen soll. Die entsprechende Auswahl des Benutzers wird dann in der Steuer- und Auswerteeinheit 7 des ersten Druckers 1 ausgewertet und anschließend in Abhängigkeit von dem Ergebnis der Auswertung ein Bedruckungsobjekt-Auswahlfenster 22, 22' aus dem Speicher 9 ausgewählt und auf der Eingabe- und Anzeigeeinrichtung 10 angezeigt.

Ist der erste Drucker 1 in dem Drucker-Auswahlfenster 21 ausgewählt worden, so wird auf der Eingabe- und Anzeigeeinrichtung 10 ein Bedruckungsobjekt-Auswahlfenster 22 angezeigt, in dem in der Regel eine Mehrzahl von Bedruckungsobjekten 6, entsprechende Symbole oder deren Bezeichnungen dargestellt sind, die von dem ausgewählten Drucker 1 bedruckbar sind. Aus diesen Kennzeichnungs- oder Markierungsschildern 6 kann der Benutzer dann das Kennzeichnungs- oder Markierungsschild 6 auswählen, das bedruckt werden soll, wobei die Auswahl wiederum in der Steuer- und Auswerteeinheit 7 ausgewertet wird. Bei dem Ausführungsbeispiel gemäß Fig. 4 sind in dem Bedruckungsobjekt-Auswahlfenster 22 neben einem Bild des jeweiligen Kennzeichnungs- oder Markierungsschilds 6 zusätzlich dessen Bezeichnung und dessen Artikelnummer dargestellt, um die Auswahl für den Benutzer sicherer zu machen.

Danach wird auf der Eingabe- und Anzeigeeinrichtung 10 eine Eingabemaske 23 für das ausgewählte Kennzeichnungs- oder Markierungsschild 6 angezeigt, wobei die Eingabemaske 23 von der Steuer- und Auswerteeinheit 7 anhand der ausgewerteten Auswahl des Kennzeichnungs- oder Markierungsschilds 6 aus einer Mehrzahl von im Speicher 9 gespeicherten Eingabemasken ausgewählt wird. In die Eingabemaske 23 kann der Benutzer dann die einzelnen Druckdaten für das zu bedruckende Kennzeichnungs- oder Markierungsschild 6 eingeben, wobei die Eingabemaske 23 so gestaltet ist, dass dem Benutzer direkt angezeigt wird, wie das später bedruckte Kennzeichnungs- oder Markierungsschild 6 aussieht.

Hat sich der Benutzer bei der Anzeige des Drucker-Auswahlfensters 21 dafür entschieden, dass ein Kennzeichnungs- oder Markierungsschild 16 mit dem zweiten, externen Drucker 11 bedruckt werden soll, so wird von der Steuer- und Auswerteeinheit 7 ein Bedruckungsobjekt-Auswahlfenster 22' ausgewählt und auf der Eingabe- und Anzeigeeinrichtung 10 angezeigt, in dem in der Regel eine Mehrzahl von Kennzeichnungs- oder Markierungsschildern 16 dargestellt sind, die mit dem zweiten Drucker 11 bedruckbar sind. Auch in dem in Fig. 5 gezeigten Bedruckungsobjekt-Auswahlfenster 22' sind dabei neben einem Bild des jeweiligen Kennzeichnungs- oder Markierungsschilds 16 zusätzlich dessen Bezeichnung und dessen Artikelnummer dargestellt. Nach Auswahl des zu bedruckenden Kennzeichnungs- oder Markierungsschilds 16 erfolgt dann die Auswahl und Anzeige einer zu dem Kennzeichnungs- oder Markierungsschild 16 passenden Eingabemaske 23' auf der Eingabe- und Anzeigeeinrichtung 10 des Druckers 1. Der Benutzer kann dann in diese Eingabemaske 23' die Druckdaten für das Kennzeichnungs- oder Markierungsschild 16 eingeben, das mit dem zweiten Drucker 11 bedruckt werden soll.

Soll ein Kennzeichnungs- oder Markierungsschild 6 vom ersten Drucker 1 bedruckt werden, so werden die Druckdaten nach der Eingabe in die Eingabemaske 23 von der Steuer- und Auswerteeinheit 7 an die Druckvorrichtung 4 des Druckers 1 übertragen. Dagegen werden die in einer Eingabemaske 23' eingegebenen Druckdaten von der Steuer- und Auswerteeinheit 7 über die Datenkommunikationsschnittstelle 8 an den zweiten Drucker 11 bzw. dessen Datenkommunikationsschnittstelle 18 übertragen, wenn ein Kennzeichnungs- oder Markierungsschild 16 vom zweiten Drucker 11 bedruckt werden soll. Als letztes erfolgt dann der Start des Druckvorgangs auf dem entsprechenden Drucker 1, 11, wozu eine entsprechende Eingabe auf der Eingabe- und Anzeigeeinrichtung 7 des ersten Druckers 1 erfolgt.

Bei dem zuvor beschriebenen und in Fig. 3 dargestellten Ablauf der Eingabe der Druckdaten an der Eingabe- und Anzeigeeinrichtung 10 des ersten Druckers 1 kann nach der Anzeige des Drucker-Auswahlfensters 21 ein weiteres Drucker-Auswahlfenster 24 angezeigt werden, wenn die Auswertung der Eingabe an dem Drucker-Auswahlfenster 21 ergeben hat, dass die Bedruckung nicht mit dem ersten Drucker 1 sondern mit einem externen Drucker 11 erfolgen soll. In dem zweiten Drucker-Auswahlfenster 24 können dann mehrere externe Drucker 11, 11' zur Auswahl angezeigt werden.

Aus der Darstellung der jeweiligen Eingabefenster 25, 25' in den Fig. 4 und 5 ist ersichtlich, dass die Eingabefenster 25, 25' bei der Eingabe der Druckdaten zweigeteilt sind, nämlich neben einem Ausschnitt der Eingabemaske 23, 23' auch ein Tastaturfeld 26, 26' angezeigt wird, mit dem die Eingabe der einzelnen Druckdaten in die einzelnen Kennzeichnungsschilder des Bedruckungsobjekts 6, 16 erfolgt. Dadurch kann bei jeder Eingabe im Tastaturfeld 26, 26' direkt überprüft werden, wie sich die Eingabe nach dem Bedrucken auf dem Kennzeichnungs- oder Markierungsschild 6, 16 auswirkt, d. h. ob tatsächlich die gewählte Eingabe auf dem gewünschten Kennzeichnungsschild des Kennzeichnungs- oder Markierungsschilds 6, 16 erscheint. Als letztes erscheint auf der Eingabe- und Anzeigeeinrichtung 10 eine Druck-Start-Fenster 27, 27', über das der Beginn der Bedruckung des zuvor ausgewählten Kennzeichnungs- oder Markierungsschilds 6, 16 auf dem ersten Drucker 1 oder einem zweiten Drucker 11 gestartet werden kann.

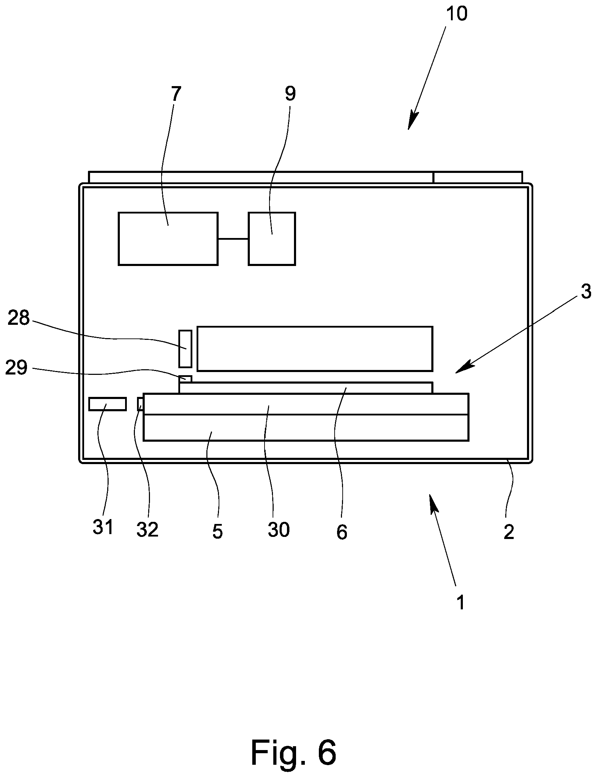

Aus der schematischen Darstellung des ersten Druckers 1 gemäß Fig. 6 ist ersichtlich, dass in dem Drucker 1 ein optischer Sensor 28 angeordnet ist, der der Erfassung einer an dem Kennzeichnungs- oder Markierungsschild 6 angebrachten Kennzeichnung 29 dient. Darüber hinaus ist aus Fig. 6 erkennbar, dass das Kennzeichnungs- oder Markierungsschild 6 nicht direkt in die Aufnahmevorrichtung 5 sondern in ein in die Aufnahmevorrichtung 5 einsetzbares Magazin 30 eingesetzt ist. Durch die Verwendung eines entsprechenden, an das jeweilige Kennzeichnungs- oder Markierungsschild 6 angepassten Magazins 30 ist sichergestellt, dass sich das Kennzeichnungs- oder Markierungsschild 6 stets in einer vorgegebenen Position innerhalb des Druckraums 3 befindet, auch wenn die Kennzeichnungs- oder Markierungsschilder 6 unterschiedliche Abmessungen, insbesondere unterschiedliche Dicken aufweisen.

Neben dem Sensor 28 ist in dem Drucker 1 noch ein weiterer Sensor 31 angeordnet, der eine am Magazin 30 angebrachte Kennzeichnung 32 erfassen kann. Die beiden optischen Sensoren 28, 31 sind dabei derart innerhalb des Gehäuses 2 angeordnet, dass ihre optischen Achsen senkrecht zueinander und senkrecht zur Bewegungsrichtung A der Aufnahmevorrichtung 5 verlaufen. Da sich darüber hinaus die Längserstreckung sowohl der Kennzeichnung 29 des Kennzeichnungs- oder Markierungsschilds 6 als auch der Kennzeichnung 32 des Magazins 30 parallel zur Bewegungsrichtung der Aufnahmevorrichtung 5 erstreckt, werden die an dem Kennzeichnungs- oder Markierungsschild 6 bzw. am Magazin 30 angeordneten Kennzeichnungen 29, 32 an den jeweiligen Sensoren 28, 31 vorbeigeführt, wenn die Aufnahmevorrichtung 5 aus der Be- und Entladeposition in die Druckposition innerhalb des Druckraums 3 verfahren wird.

Da bei den erfindungsgemäßen Verfahren bzw. dem erfindungsgemäßen Druckersystem die Auswahl des zu bedruckenden Kennzeichnungs- oder Markierungsschilds 6, 16 sowie die Eingabe der entsprechenden Druckdaten über die Eingabe- und Anzeigeeinrichtung 10 des ersten Druckers 1 erfolgt, der nach erfolgter Eingabe der Druckdaten diese an den zweiten Drucker 11 überträgt, ist es ausreichend, wenn der zweite Drucker 11 nur eine kleine Eingabe- und Anzeigeeinrichtung 33 aufweist. Auf dieser Eingabe- und Anzeigeeinrichtung 33 kann dem Benutzer beispielsweise der Status des Druckers 11 oder das gerade bedruckte Kennzeichnungs- oder Markierungsschilds 16 angezeigt werden.

Grundsätzlich ist es jedoch auch möglich, dass an dem zweiten Drucker 11 keine Eingabe- und Anzeigeeinrichtung vorgesehen ist, da die Eingabe der Druckparameter und Druckdaten bei dem Druckersystem vollständig über den ersten Drucker 1 erfolgen kann, der somit die Funktion eines "Master"-Druckers übernimmt, während der zweite, externe Drucker 11 demgegenüber als "Slave"-Drucker fungiert. Bei dem zweiten Drucker 11 dienen die Steuer- und Auswerteeinrichtung 17 primär zur Verarbeitung der über die Schnittstelle 18 von dem ersten Drucker 1 empfangenen Druckparameter und Druckdaten. Entsprechend dient auch der Speicher 19 des zweiten Druckers 11 primär zur Zwischenspeicherung von Druckparametern und Druckdaten, die dem zweiten Drucker 11 vom ersten Drucker 1 übermittelt worden sind. Darüber hinaus können in dem Speicher 19 jedoch auch Druckdaten zur Bedruckung von einzelnen Kennzeichnungs- oder Markierungsschildern 16 gespeichert sein, die von der Steuer- und Auswerteeinrichtung 17 zur Steuerung der Druckvorrichtung 14 verwendet werden.

## Patentansprüche

1. Verfahren zur Eingabe von der Beschriftung eines Bedruckungsobjekts dienenden Druckdaten durch einen Benutzer für die Bedruckung eines Kennzeichnungs- oder Markierungsschilds (6, 16) als Bedruckungsobjekt mit einem ersten Drucker (1) oder einem externen Drucker (11), wobei der erste Drucker (1) ein Gehäuse (2) mit einem innerhalb des Gehäuses (2) ausgebildeten Druckraum (3), eine Druckvorrichtung (4), eine Aufnahmevorrichtung (5) für das zu bedruckende Bedruckungsobjekts (6), eine Steuer- und Auswerteeinheit (7), eine Datenkommunikationsschnittstelle (8), einen Speicher (9) und eine Eingabe- und Anzeigeeinrichtung (10) für einen Benutzer aufweist,
wobei das Verfahren nachfolgende Schritte umfasst:
• Anzeige eines Drucker-Auswahlfensters (21) auf der Eingabe- und Anzeigeeinrichtung (10) und Auswertung einer vorgenommenen Auswahl eines Druckers (1, 11), mit dem ein Kennzeichnungs- oder Markierungsschild (6, 16) bedruckt werden soll, in der Steuer- und Auswerteeinheit (7), wobei die Auswahl den ersten Drucker (1) und einen externen Drucker (11) umfasst,
• Auswahl eines Bedruckungsobjekt-Auswahlfensters (22, 22') aus mindestens zwei im Speicher (9) gespeicherten Bedruckungsobjekt-Auswahlfenstern (22, 22') durch die Steuer- und Auswerteeinheit (7) anhand der ausgewerteten Auswahl des Druckers (1, 11),
• Anzeige des ausgewählten Bedruckungsobjekt-Auswahlfensters (22, 22') auf der Eingabe- und Anzeigeeinrichtung (10), wobei das Bedruckungsobjekt-Auswahlfenster (22, 22') mindestens ein Kennzeichnungs- oder Markierungsschild (6, 16) oder eine Bezeichnung des Kennzeichnungs- oder Markierungsschilds (6, 16) anzeigt, das von dem ausgewähltem Drucker (1, 11) bedruckbar ist, und Auswertung einer vorgenommenen Auswahl des Kennzeichnungs- oder Markierungsschilds (6, 16) in der Steuer- und Auswerteeinheit (7),
• Auswahl einer Eingabemaske (23, 23') aus einer Mehrzahl von im Speicher (8) gespeicherten Eingabemasken durch die Steuer- und Auswerteeinheit (7) anhand der ausgewerteten Auswahl des Kennzeichnungs- oder Markierungsschilds (6, 16),
• Anzeige der ausgewählten Eingabemaske (23, 23') auf der Eingabe- und Anzeigeeinrichtung (10),
• Übertragen der in die Eingabemaske (23, 23') eingegebenen Druckdaten an die Druckvorrichtung (4) des ersten Druckers (1) oder über die Datenkommunikationsschnittstelle (8) des Druckers (1) an einen externen Drucker (11), in Abhängigkeit von der zuvor ausgewerteten Auswahl eines Druckers (1, 11).

2. Verfahren nach Anspruch 1, **dadurch gekennzeichnet, dass** nach der Anzeige des Drucker-Auswahlfensters (21) ein weiteres Drucker-Auswahlfenster (24) mit externen Druckern (11) angezeigt wird, wenn die Auswertung der vorgenommenen Auswahl des Druckers (1, 11) ergeben hat, dass das Kennzeichnungs- oder Markierungsschild (16) mit einem externen Drucker (11, 11') bedruckt werden soll.

3. Verfahren nach Anspruch 1 oder 2, wobei die Übertragung der eingegebenen Druckdaten an einen ausgewählten externen Drucker (11, 11') direkt über ein Kabel oder drahtlos erfolgt.

4. Verfahren nach einem der Ansprüche 1 bis 3, wobei nach der Übertragung der Druckdaten der Start des Druckvorgangs mittels einer Eingabe in einem auf der Eingabe- und Anzeigeeinrichtung (7) angezeigten Druck-Start-Fenster (27, 27') erfolgt, unabhängig davon, ob das Kennzeichnungs- oder Markierungsschild (6, 16) von dem die Eingabe- und Anzeigeeinrichtung (7) aufweisenden Drucker (1) oder dem externen Drucker (11) bedruckt wird.

5. Verfahren nach einem der Ansprüche 1 bis 4, wobei im Gehäuse (2) mindestens ein optischer Sensor (28) zur Erfassung einer am Kennzeichnungs- oder Markierungsschild (6) angeordneten Kennzeichnung (29) vorgesehen ist, **gekennzeichnet durch** folgende Schritte:
• Ausfahren der Aufnahmevorrichtung (5) in die Be- und Entladepostion außerhalb des Druckraums (3) zum Einsetzen eines Kennzeichnungs- oder Markierungsschilds (6) in die Aufnahmevorrichtung (5), wenn die Auswertung der vorgenommenen Auswahl des Druckers (1, 11) ergeben hat, dass das Kennzeichnungs- oder Markierungsschild (6) mit dem die Eingabe- und Anzeigeeinrichtung (10) aufweisenden Drucker (1) bedruckt werden soll
• Einfahren der Aufnahmevorrichtung (5) mit dem Kennzeichnungs- oder Markierungsschild (6) in den Druckraum (3), wobei der optische Sensor (28) die am Kennzeichnungs- oder Markierungsschild (6) angeordnete Kennzeichnung (29) erfasst
• Auswahl einer Eingabemaske (23) aus einer Mehrzahl von im Speicher (9) gespeicherten Eingabemasken durch die Steuer- und Auswerteeinheit (7) anhand der vom Sensor (28) erfassten Kennzeichnung (29) des eingesetzten Bedruckungsobjekts (6).

6. Druckersystem mit einem ersten Drucker (1) und mindestens einem zweiten Drucker (11), wobei beide Drucker (1, 11) jeweils ein Gehäuse (2, 12) mit einem innerhalb des Gehäuses (2, 12) ausgebildeten Druckraum (3, 13), eine Druckvorrichtung (4, 14), eine Aufnahmevorrichtung (5, 15) für das zu bedruckende Kennzeichnungs- oder Markierungsschild (6, 16), eine Steuer- und Auswerteeinheit (7, 17) und eine Datenkommunikationsschnittstelle (8, 18) aufweisen, und wobei zumindest der erste Drucker (1) zusätzlich noch einen Speicher (9) und eine Eingabe- und Anzeigeeinheit (10) für einen Benutzer aufweist,
wobei
die Steuer- und Auswerteeinheit (7) des ersten Druckers (1) dazu ausgebildet ist, eine in einem Drucker-Auswahlfenster (21) der Eingabe- und Anzeigeeinrichtung (10) vorgenommene Auswahl des Druckers (1, 11), mit dem das Kennzeichnungs- oder Markierungsschild (6, 16) bedruckt werden soll und eine in einem Bedruckungsobjekt-Auswahlfenster (22, 22') der Eingabe- und Anzeigeeinrichtung (10) vorgenommene Auswahl eines Kennzeichnungs- oder Markierungsschilds (6, 16) auszuwerten, wobei die Auswahl des Bedruckungsobjekt-Auswahlfensters (22, 22') anhand der zuvor vorgenommenen Auswertung der Auswahl des Druckers (1, 11) erfolgt, und aus einer Mehrzahl von im Speicher (9) gespeicherten Eingabemasken (23, 23') die für das ausgewählte Kennzeichnungs- oder Markierungsschild (6, 16) vorgesehene Eingabemaske (23, 23') auszuwählen, und
dass die Steuer- und Auswerteeinheit (7) des ersten Druckers (1) dazu ausgebildet ist, die durch den Benutzer eingegebenen, der Beschriftung des Bedruckungsobjekts dienenden Druckdaten, die in einer auf der Eingabe- und Anzeigeeinheit (10) des ersten Druckers (1) angezeigten Eingabemaske (23, 23') eingegebenen sind, über die Datenkommunikationsschnittstelle (8) des ersten Druckers (1) an den zweiten Drucker (11) zu übertragen, wenn die Auswertung der vorgenommenen Auswahl des Druckers (1, 11) ergeben hat, dass das Kennzeichnungs- oder Markierungsschild (6, 16) mit dem zweiten Drucker (11) bedruckt werden soll.

7. Druckersystem nach Anspruch 6, **dadurch gekennzeichnet, dass** die Eingabe- und Anzeigeeinheit (10) des ersten Druckers (1) drehbar oder schwenkbar am Gehäuse (2) des Druckers (1) befestigt ist und vorzugsweise als Touchscreen ausgebildet ist.

8. Druckersystem nach Anspruch 6 oder 7, **dadurch gekennzeichnet, dass** in dem Gehäuse (2) des ersten Druckers (1) mindestens ein optischer Sensor (28) zur Erfassung einer am Kennzeichnungs- oder Markierungsschild (6) angeordnete Kennzeichnung (29) vorgesehen ist, und
dass die Steuer- und Auswerteeinheit (7) des ersten Druckers (1) dazu ausgebildet ist, anhand der vom Sensor (28) erfassten Kennzeichnung (29) des eingesetzten Kennzeichnungs- oder Markierungsschilds (6) aus einer Mehrzahl von im Speicher (9) gespeicherten Eingabemasken die für das eingesetzte Kennzeichnungs- oder Markierungsschild (6) geeignete Eingabemaske auszuwählen, wobei die ausgewählte Eingabemaske (23) auf der Eingabe- und Anzeigeeinrichtung (7) angezeigt wird.

9. Druckersystem nach einem der Ansprüche 6 bis 8, **dadurch gekennzeichnet, dass** der erste Drucker (1) und der zweite Drucker (11) zur Bedruckung von unterschiedlichen Kennzeichnungs- oder Markierungsschildern (6, 16) ausgebildet sind.

10. Druckersystem nach einem der Ansprüche 6 bis 9, **dadurch gekennzeichnet, dass** der erste Drucker (1) zur Bedruckung von Kennzeichnungs- oder Markierungsschildern (6) in Kartenformat vorgesehen ist und dass die Aufnahmevorrichtung (5) zur Aufnahme eines auswechselbaren Magazins (30) ausgebildet ist, in das das jeweils zu bedruckende Kennzeichnungs- oder Markierungsschild (6) eingelegt werden kann, wobei die Aufnahmevorrichtung (5) zwischen einer Be- und Entladeposition außerhalb des Druckraums (3) und einer Druckposition innerhalb des Druckraums (3) verfahrbar ist.

11. Druckersystem nach einem der Ansprüche 6 bis 10, **dadurch gekennzeichnet, dass** der zweite Drucker (11) keine oder nur eine kleine Eingabe- und Anzeigeeinrichtung (33) aufweist und vorzugsweise zur Bedruckung von Kennzeichnungs- oder Markierungsschildern (16) in Rollenformat vorgesehen ist.

## Claims

1. Method for the input of printing data by a user used for the inscription of a printing object for the printing of an identification or marking plate (6, 16) as a print object with a first printer (1) or an external printer (11), wherein the first printer (1) has a housing (2) with a print space (3) made within the housing (2), a printing device (4), a receiving device (5) for the print object (6) to be printed, a control and evaluation unit (7), a data communication interface (8), a memory (9) and an input and display apparatus (10) for a user, wherein the method comprises the following steps:
- Display of a printer selection window (21) on the input and display apparatus (10) and evaluation of a completed selection of a printer (1, 11) with which an identification or marking plate (6, 16) is to be printed upon, in the control and evaluation unit (7), wherein the selection includes the first printer (1) and an external printer (11),
- Selection of a print object selection window (22, 22') from at least two print object selection windows (22, 22') stored in the memory (9) by the control and evaluation unit (7) using the evaluated choice of the printer (1, 11),
- Display of the selected print object selection window (22, 22') on the input and display apparatus (10), wherein the print object selection window (22, 22') displays at least one identification or marking plate (6, 16) or a designation of the identification or marking plate (6, 16) which can be printed upon by the selected printer (1, 11), and evaluation of a completed selection of the identification or marking plate (6, 16) in the control and evaluation unit (7),
- Selection of an input screen (23, 23') from a plurality of input screens stored in the memory (9) by the control and evaluation unit (7) using the evaluated selection of the identification or marking plate (6, 16),
- Display of the selected input screen (23, 23') on the input and display apparatus (10),
- Transmission of the print data which have been input into the input screen (23, 23') to the printing device (4) of the first printer (1) or via the data communications interface (8) of the printer (1) to an external printer (11), depending on the previously evaluated selection of the printer (1, 11).

2. Method according to claim 1, **characterized in that** after display of the printer selection window (21) another printer selection window (24) with external printers (11) is displayed, when the evaluation of the completed selection of the printer (1, 11) has resulted **in that** the identification or marking plate (16) is to be printed upon with an external printer (11, 11').

3. Method according to claim 1 or 2, wherein the inputed print data are transmitted to a selected external printer (11, 11') directly via a cable or wirelessly.

4. Method according to any one of claims 1 to 3, wherein after transmission of the print data, the printing process is started by means of an input in a print start window (27, 27') which is displayed on the input and display apparatus (7), regardless of whether the identification or marking plate (6, 16) is being printed upon by the printer (1) which has the input and display apparatus (7) or the external printer (11).

5. Method according to any one of claims 1 to 4, wherein, in the housing (2), there is at least one optical sensor (28) for detection of an identification (29) located on the identification or marking plate (6), **characterized by** the following steps:
- Extending the receiving device (5) into the loading and unloading position outside the print space (3) for insertion of an identification or marking plate (6) into the receiving device (5), when the evaluation of the completed selection of the printer (1, 11) has resulted in that the identification or marking plate (6) is to be printed with the printer (1) which has the input and display apparatus (10),
- Retracting of the receiving device (5) with the identification or marking plate (6) into the print space (3), wherein the optical sensor (28) detects the identification (29) located on the identification or marking plate (6)
- Selection of an input screen (23) from a plurality of input screens stored in the memory (9) by the control and evaluation unit (7) using the identification (29) of the inserted print object (6), which identification has been detected by the sensor (28).

6. Printer system with a first printer (1) and at least one second printer (11), the two printers (1, 11) each having a housing (2, 12) with a print space (3, 13) which is made within the housing (2, 12,) a printing device (4, 14), a receiving device (5, 15) for the identification or marking plate (6, 16) to be printed upon, a control and evaluation unit (7, 17) and a data communications interface (8, 18), and wherein at least the first printer (1) additionally has a memory (9) and an input and display unit (10) for a user,
wherein the control and evaluation unit (7) of the first printer (1) is made to evaluate a selection of the printer (1, 11) undertaken in a printer selection window (21) of the input and display unit (10), with which the identification or marking plate (6, 16) is to be printed upon, and to evaluate a selection of an identification or marking plate (6, 16) undertaken in a print object selection window (22, 22') of the input and display unit (10), whereby the selection of the print object selection window (22, 22') takes place based on the previously carried out evaluation of the selection of the printer (1, 11), and to select from a plurality of input screens (23, 23') stored in the memory (9) the input screen (23, 23') intended for the selected identification or marking plate (6, 16), and
that the control and evaluation unit (7) of the first printer (1) is made to transmit the print data, entered by the user and used for printing the print object (6), which print data have been input in an input screen (23, 23') displayed on the input and display unit (10) of the first printer (1), via the data communications interface (8) of the first printer (1) to the second printer (11), when the evaluation of the completed selection of the printer (1, 11) has resulted in that the identification or marking plate (6, 16) is to be printed upon using the second printer (11).

7. Printer system according to claim 6, **characterized in that** the input and display unit (10) of the first printer (1) is fastened to the housing (2) of the printer (1) to be able to swivel or turn and is made preferably as a touchscreen.

8. Printer system according to claim 6 or 7, **characterized in that**, in the housing (2) of the first printer (1), there is at least one optical sensor (28) for detections of an identification (29) which is located on the identification or marking plate (6), and
that the control and evaluation unit (7) of the first printer (1) is made to select the input screen which is suitable for the inserted identification or marking plate (6) from a plurality of input screens stored in the memory (9), using the identification (29) of the inserted identification or marking plate (6) detected by the sensor (28), wherein the selected input screen (23) being displayed on the input and display apparatus (7).

9. Printer system according to any one of claims 6 to 8, **characterized in that** the first printer (1) and the second printer (11) are made to print upon different identification or marking plates (6, 16).

10. Printer system according to any one of claims 6 to 9, **characterized in that** the first printer (1) is designed to print upon identification or marking plates (6) in card format and that the receiving device (5) is made to accommodate an interchangeable magazine (30), into which the identification or marking plate (6) which is to be printed upon at the time can be inserted, wherein the receiving device (5) is movable between a loading and unloading position outside the print space (3) and a print position within the print space (3).

11. Printer system according to any one of claims 6 to 10, **characterized in that** the second printer (11) has no input and display apparatus (33) or only a small one and is intended preferably for printing upon print objects (16) in roll format.

## Revendications

1. Procédé permettant de saisir des données d'impression servant au marquage d'un objet d'impression par un utilisateur pour l'impression d'une étiquette de signalétique ou de marquage (6, 16) comme objet d'impression sur une première imprimante (1) ou une imprimante externe (11), dans lequel la première imprimante (1) présente un boîtier (2) avec une chambre d'impression (3) réalisée à l'intérieur du boîtier (2), un dispositif d'impression (4), un dispositif de réception (5) pour l'objet d'impression (6) à imprimer, une unité de commande et d'évaluation (7), une interface de communication de données (8), une mémoire (9) et un équipement de saisie et d'affichage (10) pour un utilisateur,
le procédé comprenant les étapes suivantes consistant à :
• afficher une fenêtre de sélection d'imprimante (21) sur l'équipement de saisie et d'affichage (10), et évaluer une sélection effectuée d'une imprimante (1, 11) qui doit imprimer une étiquette de signalétique ou de marquage (6, 16) dans l'unité de commande et d'évaluation (7), la sélection comprenant la première imprimante (1) et une imprimante externe (11),
• sélectionner une fenêtre de sélection d'objet d'impression (22, 22') parmi au moins deux fenêtres de sélection d'objet d'impression (22, 22') stockées dans la mémoire (9) par l'unité de commande et d'évaluation (7) à l'aide de la sélection évaluée de l'imprimante (1, 11),
• afficher la fenêtre de sélection d'objet d'impression (22, 22') sélectionnée sur l'équipement de saisie et d'affichage (10), dans lequel la fenêtre de sélection d'objet d'impression (22, 22') affiche au moins une étiquette de signalétique ou de marquage (6, 16) ou une désignation de l'étiquette de signalétique ou de marquage (6, 16) qui peut être imprimée sur l'imprimante sélectionnée (1, 11), et évaluer une sélection effectuée de l'étiquette de signalétique ou de marquage (6, 16) dans l'unité de commande et d'évaluation (7),
• sélectionner un masque de saisie (23, 23') parmi une pluralité de masques de saisie, stockés dans la mémoire (9), par l'unité de commande et d'évaluation (7) à l'aide de la sélection évaluée de l'étiquette de signalétique ou de marquage (6, 16),
• afficher le masque de saisie (23, 23') sélectionné sur l'équipement de saisie et d'affichage (10),
• transmettre les données d'impression saisies dans le masque de saisie (23, 23') au dispositif d'impression (4) de la première imprimante (1) ou par l'interface de communication de données (8) de l'imprimante (1) à une imprimante externe (11) en fonction de la sélection précédemment évaluée d'une imprimante (1, 11).

2. Procédé selon la revendication 1, **caractérisé en ce qu'**après l'affichage de la fenêtre de sélection d'imprimante (21), une autre fenêtre de sélection d'imprimante (24) avec des imprimantes externes (11) est affichée si l'évaluation de la sélection effectuée de l'imprimante (1, 11) a indiqué que l'étiquette de signalétique ou de marquage (16) doit être imprimée sur une imprimante externe (11, 11').

3. Procédé selon la revendication 1 ou 2, dans lequel la transmission des données d'impression saisies à une imprimante externe sélectionnée (11, 11') est effectuée directement par un câble ou sans fil.

4. Procédé selon l'une quelconque des revendications 1 à 3, dans lequel après la transmission des données d'impression, le démarrage du processus d'impression est effectué au moyen d'une saisie dans une fenêtre de démarrage d'impression (27, 27') affichée sur l'équipement de saisie et d'affichage (7), indépendamment du fait si l'étiquette de signalétique ou de marquage (6, 16) est imprimée sur l'imprimante (1) présentant l'équipement de saisie et d'affichage (7) ou sur l'imprimante externe (11).

5. Procédé selon l'une quelconque des revendications 1 à 4, dans lequel au moins un capteur optique (28) pour détecter une signalétique (29) disposée sur l'étiquette de signalétique ou de marquage (6) est prévu dans le boîtier (2), **caractérisé par** les étapes suivantes consistant à :
• déployer le dispositif de réception (5) dans la position de chargement et de déchargement à l'extérieur de la chambre d'impression (3) pour insérer une étiquette de signalétique ou de marquage (6) dans le dispositif de réception (5) si l'évaluation de la sélection effectuée de l'imprimante (1, 11) a indiqué que l'étiquette de signalétique et de marquage (6) doit être imprimée sur l'imprimante (1) présentant l'équipement de saisie et d'affichage (10),
• rentrer le dispositif de réception (5) avec l'étiquette de signalétique ou de marquage (6) dans la chambre d'impression (3), le capteur optique (28) détectant la signalétique (29) disposée sur l'étiquette de signalétique ou de marquage (6),
• sélectionner un masque de saisie (23) parmi une pluralité de masques de saisie, stockés dans la mémoire (9), par l'unité de commande et d'évaluation (7) à l'aide de la signalétique (29), détectée par le capteur (28), de l'objet d'impression (6) inséré.

6. Système d'impression, comprenant une première imprimante (1) et au moins une deuxième imprimante (11), dans lequel les deux imprimantes (1, 11) présentent respectivement un boîtier (2, 12) muni d'une chambre d'impression (3, 13) réalisée à l'intérieur du boîtier (2, 12), d'un dispositif d'impression (4, 14), d'un dispositif de réception (5, 15) pour l'étiquette de signalétique ou de marquage (6, 16) à imprimer, d'une unité de commande et d'évaluation (7, 17) et d'une interface de communication de données (8, 18), et dans lequel au moins la première imprimante (1) présente en outre encore une mémoire (9) et une unité de saisie et d'affichage (10) pour un utilisateur,
dans lequel l'unité de commande et d'évaluation (7) de la première imprimante (1) est réalisée pour évaluer une sélection, effectuée dans une fenêtre de sélection d'imprimante (21) de l'équipement de saisie et d'affichage (10), de l'imprimante (1, 11) sur laquelle l'étiquette de signalétique ou de marquage (6, 16) doit être imprimée, et pour évaluer une sélection, effectuée dans une fenêtre d'impression et de sélection (22, 22') de l'équipement de saisie et d'affichage (10), d'une étiquette de signalétique ou de marquage (6, 16), la sélection de la fenêtre de sélection d'objet d'impression (22, 22') étant effectuée à l'aide de l'évaluation effectuée précédemment de la sélection de l'imprimante (1, 11), et pour sélectionner parmi une pluralité de masques de saisie (23, 23') stockés dans la mémoire (9), le masque de saisie (23, 23') prévu pour l'étiquette de signalétique et de marquage (6, 16) sélectionnée, et
en ce que l'unité de commande et d'évaluation (7) de la première imprimante (1) est réalisée pour transmettre à la deuxième imprimante (11) les données d'impression saisies par l'utilisateur et servant au marquage de l'objet d'impression, qui ont été saisies dans un masque de saisie (23, 23') affiché sur l'unité de saisie et d'affichage (10) de la première imprimante (1), par l'interface de communication de données (8) de la première imprimante (1), si l'évaluation de la sélection effectuée de l'imprimante (1, 11) a indiqué que l'étiquette de signalétique ou de marquage (6, 16) doit être imprimée sur la deuxième imprimante (11).

7. Système d'impression selon la revendication 6, **caractérisé en ce que** l'unité de saisie et d'affichage (10) de la première imprimante (1) est fixée de manière rotative ou pivotante au niveau du boîtier (2) de l'imprimante (1) et est de préférence réalisée sous forme d'écran tactile.

8. Système d'impression selon la revendication 6 ou 7, **caractérisé en ce qu'**au moins un capteur optique (28) pour la détection d'une signalétique (29) disposée sur l'étiquette de signalétique ou de marquage (6) est prévu dans le boîtier (2) de la première imprimante (1), et
**en ce que** l'unité de commande et d'évaluation (7) de la première imprimante (1) est réalisée pour sélectionner à l'aide de la signalétique (29), détectée par le capteur (28) de l'étiquette de signalétique ou de marquage (6) insérée, parmi une pluralité de masques de saisie stockés dans la mémoire (9) le masque de saisie adapté à l'étiquette de signalétique ou de marquage insérée (6), le masque de saisie sélectionné (23) étant affiché sur l'équipement de saisie et d'affichage (7).

9. Système d'impression selon l'une quelconque des revendications 6 à 8, **caractérisé en ce que** la première imprimante (1) et la deuxième imprimante (11) sont réalisées pour imprimer différentes étiquettes de signalétique ou de marquage (6, 16).

10. Système d'impression selon l'une quelconque des revendications 6 à 9, **caractérisé en ce que** la première imprimante (1) est prévue pour imprimer des étiquettes signalétique ou de marquage (6) sous forme de cartes, et **en ce que** le dispositif de réception (5) est réalisé pour recevoir un magasin interchangeable (30) dans lequel l'étiquette de signalétique ou de marquage (6) respectivement à imprimer peut être insérée, dans lequel le dispositif de réception (5) peut être déplacé entre une position de chargement et de déchargement à l'extérieur de la chambre d'impression (3) et une position d'impression à l'intérieur de la chambre d'impression (3).

11. Système d'impression selon l'une quelconque des revendications 6 à 10, **caractérisé en ce que** la deuxième imprimante (11) ne présente aucun équipement de saisie et d'affichage (33), ou seul un petit équipement, et est de préférence prévue pour imprimer des étiquettes de signalétique ou de marquage (16) sous forme de rouleau.
